# EUROPEAN PATENT APPLICATION

(11) **EP 4 633 244 A1**
(43) Date of publication of application: **15.10.2025**
(21) Application number: 23899856.1
(22) Date of filing: 29.11.2023
(51) Int. Cl.: H04W 52/02

(54) **ENERGY-SAVING CONTROL METHOD AND APPARATUS, AND STORAGE MEDIUM**

(30) Priority: 06.12.2022 CN 202211580907
(71) Applicant: Datang Mobile Communications Equipment Co., Ltd., Beijing 100085 (CN)
(72) Inventor: HUANG, Yuanfang, Beijing 100085 (CN); SUN, Huiqing, Beijing 100085 (CN)
(74) Representative: Studio Torta S.p.A.
(86) International application number: PCT/CN2023/135088
(87) International publication number: WO 2024/120277

(57) **Abstract**

Embodiments of the present disclosure provide an energy-saving control method and apparatus, and a storage medium. The method comprises: sending a first message to an E2 node, wherein the first message comprises first energy-saving control policy information, and the first energy-saving control policy information is used for controlling a cell of the E2 node to enter an energy-saving mode or an energy-saving compensation mode.

## Description

### CROSS-REFERENCES TO RELATED APPLICATIONS

The present application claims priority to Chinese patent application No. 202211580907.0 filed on December 6, 2022, entitled "Energy-Saving Control Method and Apparatus, and Storage Medium", which is hereby incorporated by reference in its entirety.

### FIELD

The present application relates to the field of communications, and in particular to methods and apparatuses for energy-saving control, and a storage medium.

### BACKGROUND

A mission of an open radio access network (O-RAN) is to build an open, virtualized, and intelligent radio access network (RAN) architecture, to create a competitive ecosystem that includes multiple vendors and in which products of various vendors may interoperate. In the O-RAN, a near-real-time RAN intelligent controller (Near-RT RIC) controls an E2 node through an E2 interface based on a function opened by the E2 node, to achieve a goal of optimizing RAN radio resources.

Regarding an energy-saving characteristic, the O-RAN identifies corresponding sub-use cases, one of which is to support cell shutdown. A use case considers deploying an artificial intelligence (AI)/machine learning (ML) model in the Near-RT RIC to complete an inference and obtain an output, and to optimize an energy-saving related configuration for a base station through the E2 interface, to improve energy efficiency of a system. Although a traditional E2 service model RAN control (E2SM-RC) mainly focuses on the control at user equipment (UE) level, the latest version of a specification has introduced UE group based control, where the UE group may be defined as a specific cell or a group of cells, to enable cell-level control. However, an E2SM-RC specification does not support an implementation of the energy-saving characteristic, which results in an inability of the Near-RT RIC to intelligently control a radio system to reduce energy consumption.

### BRIEF SUMMARY

Embodiments of the present application provide methods and apparatuses for energy-saving control, and a storage medium, to solve a problem that the open radio access network (O-RAN) architecture in the related art cannot support near-real-time intelligent energy-saving control.

An embodiment of the present application provides a method for energy-saving control, performed by a near-real-time radio access network (RAN) intelligent controller (Near-RT RIC), and the method includes:
transmitting a first message to an E2 node, where the first message includes first energy-saving control policy information, and the first energy-saving control policy information is used to control a cell of the E2 node to enter an energy-saving mode or an energy-saving compensation mode.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the method further includes:
obtaining cell energy-saving control execution outcome information transmitted from the E2 node.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the method further includes:
obtaining feedback information, transmitted from the E2 node, of a cell activation status.

In some embodiments, the method further includes:
transmitting a second message to the E2 node, where the second message is used to subscribe to the feedback information, reported from the E2 node, of the cell activation status in case that a cell energy-saving mode changes.

In some embodiments, after transmitting the first message to the E2 node, the method further includes:
obtaining cell energy-saving related information transmitted from the E2 node;
obtaining second energy-saving control policy information based on the cell energy-saving related information; and
transmitting a third message to the E2 node, where the third message includes the second energy-saving control policy information, and the second energy-saving control policy information is used to control the cell of the E2 node to exit the energy-saving mode or the energy-saving compensation mode.

In some embodiments, the second energy-saving control policy information includes one or more of the following types of information:
a cell identifier;
a cell group identifier;
an indication for exiting the energy-saving mode; or
an indication for exiting the energy-saving compensation mode.

An embodiment of the present application provides a method for energy-saving control, performed by an E2 node, and the method includes:
obtaining a first message transmitted from a near-real-time radio access network (RAN) intelligent controller (Near-RT RIC), where the first message includes first energy-saving control policy information, and the first energy-saving control policy information is used to control a cell of the E2 node to enter an energy-saving mode or an energy-saving compensation mode; and
controlling the cell to enter the energy-saving mode or the energy-saving compensation mode based on the first energy-saving control policy information.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the method further includes:
transmitting cell energy-saving control execution outcome information to the Near-RT RIC.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the method further includes:
transmitting feedback information of a cell activation status to the Near-RT RIC.

In some embodiments, the method further includes:
determining that a duration of the energy-saving mode is reached and a cell energy-saving mode changes.

In some embodiments, the method further includes:
obtaining a second message transmitted from the Near-RT RIC, where the second message is used to subscribe to the feedback information, reported from the E2 node, of the cell activation status in case that a cell energy-saving mode changes; and
receiving a request to subscribe to the feedback information of the cell activation status.

In some embodiments, the method further includes:
obtaining a third message transmitted from the Near-RT RIC, where the third message includes second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

In some embodiments, the second energy-saving control policy information includes one or more of the following types of information:
a cell identifier;
a cell group identifier;
an indication for exiting the energy-saving mode; or
an indication for exiting the energy-saving compensation mode.

An embodiment of the present application provides a network device, used in a near-real-time radio access network (RAN) intelligent controller (Near-RT RIC), and the network device includes: a memory, a transceiver, and a processor;
where the memory is used for storing a computer program; the transceiver is used for receiving and transmitting data under control of the processor; and the processor is used for reading the computer program in the memory and performing the following operations:
transmitting a first message to an E2 node, where the first message includes first energy-saving control policy information, and the first energy-saving control policy information is used to control a cell of the E2 node to enter an energy-saving mode or an energy-saving compensation mode.

In some embodiments, where the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, where the processor is further used for:
obtaining cell energy-saving control execution outcome information transmitted from the E2 node.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the processor is further used for:
obtaining feedback information, transmitted from the E2 node, of a cell activation status.

In some embodiments, the processor is further used for:
transmitting a second message to the E2 node, where the second message is used to subscribe to the feedback information, reported from the E2 node, of the cell activation status in case that a cell energy-saving mode changes.

In some embodiments, after transmitting the first message to the E2 node, the processor is further used for:
obtaining cell energy-saving related information transmitted from the E2 node;
obtaining second energy-saving control policy information based on the cell energy-saving related information; and
transmitting a third message to the E2 node, where the third message includes the second energy-saving control policy information, and the second energy-saving control policy information is used to control the cell of the E2 node to exit the energy-saving mode or the energy-saving compensation mode.

In some embodiments, the second energy-saving control policy information includes one or more of the following types of information:
a cell identifier;
a cell group identifier;
an indication for exiting the energy-saving mode; or
an indication for exiting the energy-saving compensation mode.

An embodiment of the present application provides a network device, used in an E2 node, and the network device includes: a memory, a transceiver, and a processor;
where the memory is used for storing a computer program; the transceiver is used for receiving and transmitting data under control of the processor; and the processor is used for reading the computer program in the memory and performing the following operations:
obtaining a first message transmitted from a near-real-time radio access network (RAN) intelligent controller (Near-RT RIC), where the first message includes first energy-saving control policy information, and the first energy-saving control policy information is used to control a cell of the E2 node to enter an energy-saving mode or an energy-saving compensation mode; and
controlling the cell to enter the energy-saving mode or the energy-saving compensation mode based on the first energy-saving control policy information.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the processor is further used for:
transmitting cell energy-saving control execution outcome information to the Near-RT RIC.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the processor is further used for:
transmitting feedback information of a cell activation status to the Near-RT RIC.

In some embodiments, the processor is further used for:
determining that a duration of the energy-saving mode is reached and a cell energy-saving mode changes.

In some embodiments, the processor is further used for:
obtaining a second message transmitted from the Near-RT RIC, where the second message is used to subscribe to the feedback information, reported from the E2 node, of the cell activation status in case that a cell energy-saving mode changes; and
receiving a request to subscribe to the feedback information of the cell activation status.

In some embodiments, the processor is further used for:
obtaining a third message transmitted from the Near-RT RIC, where the third message includes second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

In some embodiments, the second energy-saving control policy information includes one or more of the following types of information:
a cell identifier;
a cell group identifier;
an indication for exiting the energy-saving mode; or
an indication for exiting the energy-saving compensation mode.

An embodiment of the present application provides an apparatus for energy-saving control, including:
a transmitting module, used for transmitting a first message to an E2 node, wherein the first message includes first energy-saving control policy information, and the first energy-saving control policy information is used to control a cell of the E2 node to enter an energy-saving mode or an energy-saving compensation mode.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the transmitting module is further used for:
obtaining cell energy-saving control execution outcome information transmitted from the E2 node.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the apparatus is further used for:
obtaining feedback information, transmitted from the E2 node, of a cell activation status.

In some embodiments, the apparatus is further used for:
transmitting a second message to the E2 node, where the second message is used to subscribe to the feedback information, reported from the E2 node, of the cell activation status in case that a cell energy-saving mode changes.

In some embodiments, after transmitting the first message to the E2 node, further including:
obtaining cell energy-saving related information transmitted from the E2 node;
obtaining second energy-saving control policy information based on the cell energy-saving related information; and
transmitting a third message to the E2 node, where the third message includes the second energy-saving control policy information, and the second energy-saving control policy information is used to control the cell of the E2 node to exit the energy-saving mode or the energy-saving compensation mode.

In some embodiments, the second energy-saving control policy information includes one or more of the following types of information:
a cell identifier;
a cell group identifier;
an indication for exiting the energy-saving mode; or
an indication for exiting the energy-saving compensation mode.

An embodiment of the present application provides an apparatus for energy-saving control, including:
a receiving module, used for obtaining a first message transmitted from a near-real-time radio access network (RAN) intelligent controller (Near-RT RIC), where the first message includes first energy-saving control policy information, and the first energy-saving control policy information is used to control a cell of an E2 node to enter an energy-saving mode or an energy-saving compensation mode; and
a controlling module, used for controlling the cell to enter the energy-saving mode or the energy-saving compensation mode based on the first energy-saving control policy information.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the apparatus is further used for:
transmitting cell energy-saving control execution outcome information to the Near-RT RIC.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the apparatus is further used for:
transmitting feedback information of a cell activation status to the Near-RT RIC.

In some embodiments, the apparatus is further used for:
determining that a duration of the energy-saving mode is reached and a cell energy-saving mode changes.

In some embodiments, the apparatus is further used for:
obtaining a second message transmitted from the Near-RT RIC, where the second message is used to subscribe to the feedback information, reported from the E2 node, of the cell activation status in case that a cell energy-saving mode changes; and
receiving a request to subscribe to the feedback information of the cell activation status.

In some embodiments, the apparatus is further used for:
obtaining a third message transmitted from the Near-RT RIC, where the third message includes second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

In some embodiments, the second energy-saving control policy information includes one or more of the following types of information:
a cell identifier;
a cell group identifier;
an indication for exiting the energy-saving mode; or
an indication for exiting the energy-saving compensation mode.

An embodiment of the present application provides a processor-readable storage medium storing a computer program, and the computer program is used for causing a processor to perform any of the methods for energy-saving control provided by the above.

An embodiment of the present application provides a computer-readable storage medium storing a computer program, and the computer program is used for causing a computer to perform any of the methods for energy-saving control provided by the above.

An embodiment of the present application provides a communication device-readable storage medium storing a computer program, and the computer program is used for causing a communication device to perform any of the methods for energy-saving control provided by the above.

An embodiment of the present application provides a chip product-readable storage medium storing a computer program, and the computer program is used for causing a chip product to perform any of the energy-saving control methods provided by the above.

In the methods and apparatuses for energy-saving control, and the storage medium provided by the embodiments of the present application, by defining the implementation method, procedure and message enhancement method of intelligent energy-saving control for intelligent cell shutdown, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a first schematic flowchart of a method for energy-saving control according to an embodiment of the present application;
FIG. 2 is a first schematic diagram of an interface energy-saving control procedure of a method for energy-saving control according to an embodiment of the present application;
FIG. 3 is a second schematic diagram of an interface energy-saving control procedure of a method for energy-saving control according to an embodiment of the present application;
FIG. 4 is a schematic diagram of a control procedure based on E2 service model radio access network (RAN) control (E2SM-RC) according to an embodiment of the present application;
FIG. 5 is a schematic diagram of a control procedure based on E2 service model for cell configuration and control (E2SM-CCC) according to an embodiment of the present application;
FIG. 6 is a second schematic flowchart of a method for energy-saving control according to an embodiment of the present application;
FIG. 7 is a schematic structural diagram of a near-real-time radio access network (RAN) intelligent controller (Near-RT RIC) according to an embodiment of the present application;
FIG. 8 is a schematic structural diagram of an E2 node according to an embodiment of the present application;
FIG. 9 is a first schematic structural diagram of an apparatus for energy-saving control according to an embodiment of the present application; and
FIG. 10 is a second schematic structural diagram of an apparatus for energy-saving control according to an embodiment of the present application.

### DETAILED DESCRIPTION

There is a discussion on introducing an energy-saving characteristic for an open radio access network (O-RAN). Regarding the energy-saving characteristic, the O-RAN identifies corresponding sub-use cases, one of which is to support cell shutdown. A use case considers deploying an artificial intelligence (AI)/machine learning (ML) model in a near-real-time radio access network (RAN) intelligent controller (Near-RT RIC) to complete an inference and obtain an output, and to optimize an energy-saving related configuration for a base station through an E2 interface, to improve energy efficiency of a system. In case that a load is low, energy saving may be achieved by shutting down one or more cells. In order not to affect user experience, users served on a cell that needs to be shut down need to be unloaded to a new target cell before the shutdown.

An implementation of an RAN function of an E2 node is defined through E2 service model (E2SM) series of specifications, which includes services such as report, insert, control, and policy. Although a traditional E2 service model RAN control (E2SM-RC) mainly focuses on the control at user equipment (UE) level, the latest version of a specification has introduced cell group based control, to enable cell-level control. However, an E2SM-RC specification does not support an implementation of the energy-saving characteristic.

To make the objectives, solutions, and advantages of the embodiments of the present application more clear, the solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

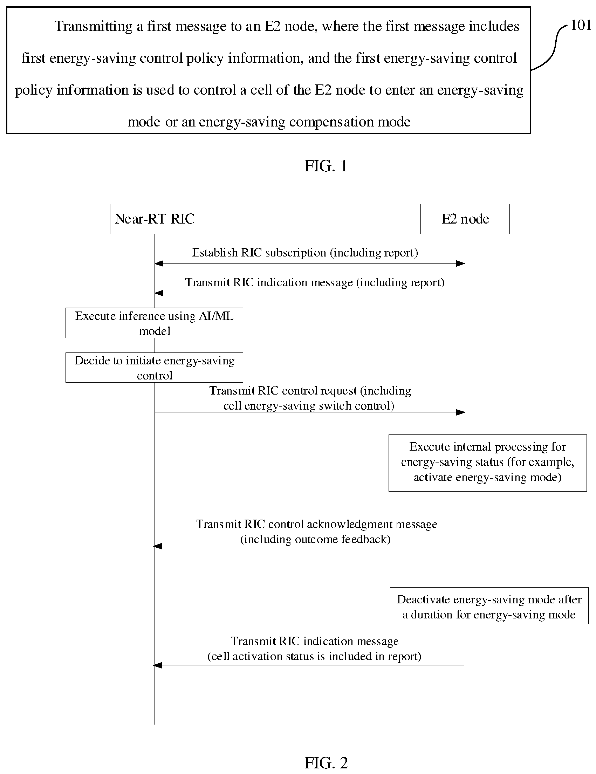

FIG. 1 is a first schematic flowchart of a method for energy-saving control according to an embodiment of the present application. Referring to FIG. 1, an embodiment of the present application provides a method for energy-saving control, and an execution subject of the method is a near-real-time radio access network (RAN) intelligent controller (Near-RT RIC). The method includes:
step 101: transmitting a first message to an E2 node, where the first message includes first energy-saving control policy information, and the first energy-saving control policy information is used to control a cell of the E2 node to enter an energy-saving mode or an energy-saving compensation mode.

In an embodiment, the Near-RT RIC transmits an RIC control request message to control the cell connected to the E2 node to enter the energy-saving mode or the energy-saving compensation mode and set a duration of the energy-saving mode. Meanwhile, power adjustment parameters may be provided for the energy-saving compensation cells. The E2 node may feed back an energy-saving mode configuration status in an RIC control acknowledge message. The cell exits the energy-saving mode or energy-saving compensation mode after the duration, and the E2 node reports a cell activation status through an RIC indication message including a report based on the cell status. In an embodiment, the Near-RT RIC transmits an RIC control request message to control a cell to enter the energy-saving mode or energy-saving compensation mode. The E2 node may feed back the energy-saving mode configuration status in an RIC control acknowledge. The Near-RT RIC transmits an RIC control request message based on cell information subsequently reported by the E2 node, to directly control the cell to exit the energy-saving mode or energy-saving compensation mode.

The Near-RT RIC refers to the near-real-time radio access network (RAN) intelligent controller (RIC). An energy-saving cell refers to a cell that enters the energy-saving mode. A compensation cell refers to a cell that enters the energy-saving compensation mode. The energy-saving mode means that after a cell enters the energy-saving mode, the cell will be shut down or the use of physical resources is restricted to achieve the purpose of energy saving. The energy-saving compensation mode means that in response to some cells entering the energy-saving mode, cells in the energy-saving compensation mode remain operational, take over the coverage area originally served by the energy-saving cells and undertake the traffic of the energy-saving cells.

For example, the Near-RT RIC analyzes data based on the information reported by the E2 node, executes inference using an artificial intelligence (AI)/machine learning (ML) model, decides to initiate intelligent control of cell shutdown for the E2 node based on the optimization objectives or policies, and transmits the RIC control request message, where the RIC control request message includes designating certain original cells to enter the energy-saving mode and the duration of the energy-saving mode, designating candidate cells to enter the energy-saving compensation mode, the duration, and power adjustment of the compensation cells to increase coverage, etc.

In the method for energy-saving control provided by the embodiment of the present application, by defining the implementation method, procedure and message enhancement method of intelligent energy-saving control for the intelligent cell shutdown, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In an embodiment, in case that the E2 node receives the control message including the control action, the E2 node transfers, based on an control indication, the services of the cell that needs to enter the energy-saving mode to the energy-saving compensation cell, and hands over a user equipment (UE) originally connected to the energy-saving cell to the compensation cell. In order to guarantee that the compensation cell may cope with the energy-saving cell shutdown and satisfy the previous coverage, the transmit power may be configured to increase the coverage range of the compensation cell. The absolute value of transmit power in the compensation mode refers to the current value for the transmit power in the compensation mode. The relative value of transmit power in the compensation mode refers to a difference between the current value for the transmit power in the compensation mode and a value for the transmit power in the compensation mode at a previous time point.

In the method for energy-saving control provided by the embodiment of the present application, by adding the RIC control request message transmitted from the Near-RT RIC to the E2 node, the E2 node may control, based on a control indication, the corresponding cell to enter the energy-saving mode or energy-saving compensation mode, and transfer the services of the cell that needs to enter the energy-saving mode to the energy-saving compensation cell, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

In some embodiments, the method further includes:
obtaining cell energy-saving control execution outcome information transmitted from the E2 node.

In an embodiment, in case that the E2 node receives the RIC control request message, the E2 node performs configuration for the cell based on the control indication for cell shutdown, activates a cell energy-saving mode, and performs corresponding configurations for the energy-saving cell and the compensation cell. The E2 node feeds back the execution outcome of the intelligent cell shutdown to the Near-RT RIC based on the execution of the control indication, and uses the RIC control acknowledgment message to carry the control outcome.

In the method for energy-saving control provided by the embodiment of the present application, by defining the implementation method, procedure and message enhancement method of intelligent energy-saving control for the intelligent cell shutdown, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In an embodiment, energy-saving feedback parameters are added to the outcome feedback. Whether the energy-saving cell enters the energy-saving mode and whether the compensation cell enters the energy-saving compensation mode may be fed back jointly. The cell identifier is used to identify the cell that requires energy-saving control. The cell group identifier is used to identify the cell group that requires energy-saving control.

For example, the outcome of whether the cell energy-saving mode is activated is fed back.

For another example, the outcome of whether the cell energy-saving compensation mode is activated is fed back.

In the method for energy-saving control provided by the embodiment of the present application, by adding the energy-saving feedback parameters to the outcome feedback, the applicability is enhanced, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

In some embodiments, the method further includes:
obtaining feedback information, transmitted from the E2 node, of a cell activation status.

In some embodiments, in case that the E2 node configures the energy-saving cell and the duration of the energy-saving mode based on the specific parameters in the energy-saving control action, the corresponding cell exits the energy-saving status after the duration. The E2 node may decide whether the cell is reactivated based on the load condition. Since the cell exits the energy-saving status, which meets the trigger conditions of the change of the cell energy-saving status and the arrival of the duration, the E2 node feeds back the cell activation status information to the Near-RT RIC.

In the method for energy-saving control provided by the embodiment of the present application, by adding trigger conditions which trigger the E2 node to feed back the cell activation status to the Near-RT RIC, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

In some embodiments, the method further includes:
transmitting a second message to the E2 node, where the second message is used to subscribe to the feedback information, reported from the E2 node, of the cell activation status in case that a cell energy-saving mode changes.

In some embodiments, an RIC subscription including reports is established between the Near-RT RIC and the E2 node. In case that after the E2 node performs configurations for the energy-saving cell and the duration of the energy-saving mode, the corresponding cell exits the energy-saving status or the energy-saving compensation status after the duration, the E2 node may decide whether the energy-saving cell is reactivated and feed back the information about whether the cell is activated to the Near-RT RIC through the report.

In the method for energy-saving control provided by the embodiment of the present application, by establishing the RIC subscription between the Near-RT RIC and the E2 node, the Near-RT RIC receives the feedback information on the cell activation status transmitted from the E2 node, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

In some embodiments, after transmitting the first message to the E2 node, the method further includes:
obtaining cell energy-saving related information transmitted from the E2 node;
obtaining second energy-saving control policy information based on the cell energy-saving related information; and
transmitting a third message to the E2 node, where the third message includes the second energy-saving control policy information, and the second energy-saving control policy information is used to control the cell of the E2 node to exit the energy-saving mode or the energy-saving compensation mode.

In some embodiments, the Near-RT RIC decides to indicate the cell of the E2 node to exit the energy-saving status based on the energy-saving related information subsequently reported from the E2 node, and transmits the RIC control request message again to indicate the related cell to exit the energy-saving status. In case that the E2 node receives the RIC control request message, the E2 node exits the cell energy-saving mode based on the control action and feeds back the outcome of the energy-saving control to the Near-RT RIC.

In the method for energy-saving control provided by the embodiment of the present application, by defining the implementation method, procedure and message enhancement method of intelligent energy-saving control for the intelligent cell shutdown, it makes up for the lack of support for energy-saving characteristic in the current E2 interface related specifications, supports the flexible configuration of Near-RT RIC to achieve energy saving on the RAN side, and is able to intelligently control the radio system to reduce energy consumption.

In some embodiments, the second energy-saving control policy information includes one or more of the following types of information:
a cell identifier;
a cell group identifier;
an indication for exiting the energy-saving mode; or
an indication for exiting the energy-saving compensation mode.

In some embodiments, the Near-RT RIC decides to indicate the cell of the E2 node to exit the energy-saving status based on the energy-saving related information subsequently reported from the E2 node, and transmits the RIC control request message again to indicate the related cell to exit the energy-saving status.

For example, the energy-saving cell is indicated to exit the energy-saving mode.

For another example, the energy-saving compensation cell is indicated to exit the energy-saving compensation mode.

In the method for energy-saving control provided by the embodiment of the present application, by adding the information indicating the related cells to exit the energy-saving status, it ensures that the related cells may exit the energy-saving status in time, it makes up the lack of support for energy-saving characteristic in the current E2 interface related specifications, supports the flexible configuration of Near-RT RIC to achieve energy saving on the RAN side, and is able to intelligently control the radio system to reduce energy consumption.

FIG. 2 is a first schematic diagram of an interface energy-saving control procedure of a method for energy-saving control according to an embodiment of the present application. Referring to FIG. 2, the energy-saving control scheme and procedure supporting cell shutdown are as follows.

Step 1: an RIC subscription including reports is established between the Near-RT RIC and the E2 node to collect information such as cell information, energy-saving related configurations, performance indicators, and measurement reports. The E2 node transmits, based on subscription requirements, an RIC indication message, including energy-saving related reporting information, such as cell load related information, cell traffic information, cell energy efficiency, or measurement reports related to cell power consumption.

Step 2: the Near-RT RIC analyzes data based on the information reported by the E2 node, executes inference using the AI/ML model, decides to initiate intelligent control of cell shutdown for the E2 node based on optimization objectives or policies, and transmits the RIC control request message, where the RIC control request message includes designating certain original cells to enter the energy-saving mode and the duration of the energy-saving mode, designating candidate cells to enter the energy-saving compensation mode, the duration, and power adjustment of the compensation cells to increase coverage, etc.

Step 3: in case that the E2 node receives the RIC control request message, the E2 node performs configuration for the cell based on the control indication for cell shutdown, activates the cell energy-saving mode, and performs corresponding configurations for the energy-saving cell and the compensation cell. The E2 node feeds back the execution outcome of the intelligent cell shutdown to the Near-RT RIC based on the execution of the control indication, and uses the RIC control acknowledgment message to carry the outcome feedback.

Step 4: in case that after the E2 node performs configurations for the energy-saving cell and the duration of the energy-saving mode, the corresponding cell exits the energy-saving status or the energy-saving compensation status after the duration, the E2 node may decide whether the energy-saving cell is reactivated and feed back the information about whether the cell is activated to the Near-RT RIC through the report.

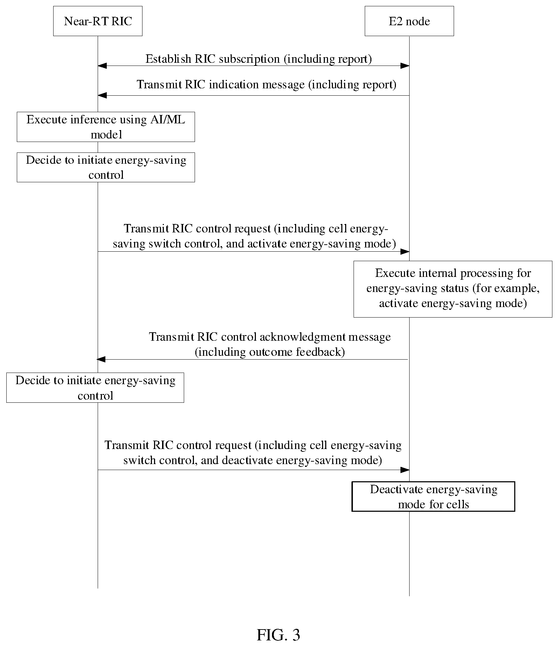

FIG. 3 is a second schematic diagram of an interface energy-saving control procedure of a method for energy-saving control according to an embodiment of the present application. Referring to FIG. 3, the energy-saving control scheme and procedure supporting cell shutdown are as follows.

Step 1: an RIC subscription including reports is established between the Near-RT RIC and the E2 node to collect information such as cell information, energy-saving related configurations, performance indicators, and measurement reports. The E2 node transmits, based on subscription requirements, an RIC indication message, including energy-saving related reporting information, such as cell load related information, cell traffic information, cell energy efficiency, or cell power consumption related to measurement reports.

Step 2: the Near-RT RIC analyzes data based on the information reported by the E2 node, executes inference using the AI/ML model, decides to initiate intelligent control of cell shutdown for the E2 node based on optimization objectives or policies, and transmits the RIC control request message, where the RIC control request message includes designating certain original cells to enter the energy-saving mode, designating candidate cells to enter the energy-saving compensation mode, and power adjustment of the compensation cells to increase coverage, etc.

Step 3: in case that the E2 node receives the RIC control request message, the E2 node performs configuration for the cell based on the control indication for cell shutdown, activates the cell energy-saving mode, and performs corresponding configurations for the energy-saving cell and the compensation cell. The E2 node feeds back the execution outcome of the intelligent cell shutdown to the Near-RT RIC based on the execution of the control indication, and uses the RIC control acknowledgment message to carry the outcome feedback.

Step 4: the Near-RT RIC decides to indicate the cell of the E2 node to exit the energy-saving status based on the energy-saving related information subsequently reported from the E2 node, and transmits the RIC control request message again to indicate the related cells to exit the energy-saving status.

Step 5: in case that the E2 node receives the RIC control request message, the E2 node exits the cell energy-saving mode based on the control action and feeds back the outcome of the energy-saving control to the Near-RT RIC.

The following uses several specific examples to further illustrate the method in the above embodiments of the present application.

Example 1: energy-saving characteristic for cell shutdown is supported in E2SM-RC.

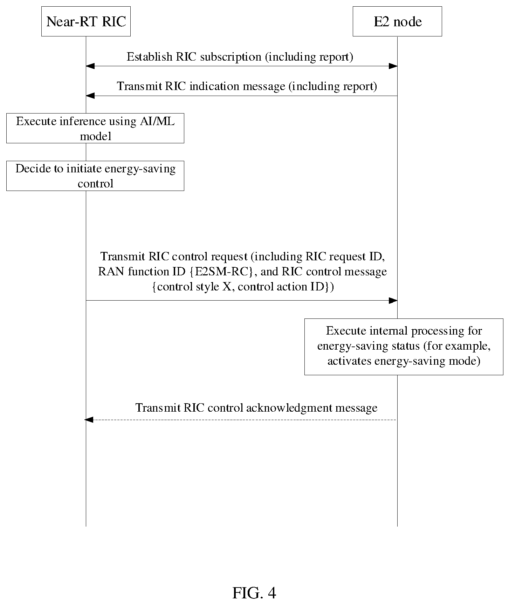

FIG. 4 is a schematic diagram of a control procedure based on E2SM-RC according to an embodiment of the present application. Referring to FIG. 4, a method for energy-saving control provided by an embodiment of the present application includes the following steps.

Step 1: a reporting related to RIC subscription is established between the Near-RT RIC and the E2 node to collect information such as configurations, performance indicators, and measurement reports.

Step 2: the E2 node transmits an RIC indication message based on subscription requirements, where the RIC indication message includes energy-saving related reporting information, such as cell load related information, cell traffic information, cell energy efficiency, or cell power consumption related to measurement reports.

Step 3: the Near-RT RIC analyzes data based on the information reported by the E2 node, executes inference using the AI/ML model, and decides to initiate energy-saving control for the E2 node based on optimization objectives or policies.

Step 4: the Near-RT RIC transmits an RIC control request message, where the RAN function identifier (ID) is indicated as E2SM-RC, which includes a newly defined control style X and corresponding control actions.

Step 5: the E2 node executes the configuration for cell shutdown based on a control command designated by the Near-RT RIC. The E2 node may further feed back an RIC control acknowledgment message to the Near-RT RIC upon executing the action.

In the above steps, an enhanced design for some messages includes the following aspects.

### (1) Enhanced design for the RIC control request message

E2SM-RC currently supports intelligent control for a single UE, and the control for UE group is already supported in the current specifications. By setting the UE group as a filtering condition at a node level or cell level in RIC control header, control at the node or cell level may be achieved.

In order to enable the RIC control request messages in Step 2 of FIG. 2 and Step 2 of FIG. 3 to support the energy-saving control for cell shutdown, it is necessary to define the specific control content included in an information element (IE) of the RIC control message in E2SM-RC. A new control style X is added to the traditional E2SM-RC control service style for configuring energy-saving related parameters, as shown in the following table.

**Table 1 Control Service Style Types List**

| RIC Style Type | Style Name | Style Description |
|---|---|---|
| 1 | Radio Bearer control (RBC) | Used to modify the configuration of the RBC related parameters and/or behaviours at the E2 Node for a specific UE. |
| | | Belongs to Fundamental level CONTROL Services. |
| 2 | Radio resource allocation control | Used to modify the configuration of the Radio Resource Allocation control related parameters and/or behaviours at the E2 Node for a specific E2 Node, cell, slice, UE and/or QoS. |
| | | Belongs to Fundamental level CONTROL Services. |
| 3 | Connected Mode Mobility control | Used to initiate a connected mode mobility procedure (Handover (HO) or Conditional Handover (CHO)), optionally with Dual Active Protocol Stack (DAPS), for a specific UE towards either a target cell (for HO) or a list of candidate cells (for CHO). |
| ... | ... | ... |
| X | Energy Saving control | Used to modify the configuration of the energy saving related parameters, for control at either the cell group level or the cell level. |

The control style X includes control action 1: cell energy saving (ES) mode control, which may also be extended if necessary in the future.

**Table 2 Control Actions Supported by Control Style X for ES Control**

| Control Action ID | Control Action Name | Control Action description | related RAN Parameters |
|---|---|---|---|
| 1 | Cell ES switch control | Control the ES optimization between cells, designate a cell to enter or exit the ES status, and designate the traffic of the cell to be unloaded to the specified ES compensation cell. | Refer to Table 3 for details |
| ... | ... | ... | |

The control parameters related to the switch control of the cell ES mode in control action 1 are as follows.

**Table 3 RAN Parameters for Control Action 1**

| RAN Parameter ID | RAN Parameter | RAN Parameter Value Type | RAN Parameter Definition |
|---|---|---|---|
| 1 | Cells To Configure ES mode List | LIST | Configure the cell ES mode |
| 2 | > Cell To Configure ES mode Item | | |
| 3 | >> Cell Global ID | STRUCTURE | Cell identifier |
| 4 | >> ES activation indication | ELEMENT | ENUMERATED (activated, deactivated, ...) |
| | | | Indication for activating or deactivating the cell ES mode. "Activated" indicates to activate the cell ES mode, and "deactivated" indicates to deactivate the cell ES mode. |
| *5* | >> ES Duration | ELEMENT | Indication for the duration of the ES mode. Optional |
| 6 | Compensation Cells for ES mode List | LIST | To cope with the configuration of the ES cell, the cell that keeps operating takes over the original coverage area of the ES cell and undertakes the traffic of the ES cell. |
| 7 | > Compensation Cell Item | | |
| 8 | >> Cell Global ID | STRUCTURE | Cell identifier |
| 9 | >> ES Compensation activation indication | ELEMENT | ENUMERATED (activated, deactivated, ...) |
| | | | Indication for the cell to enter or exit the ES compensation mode. |
| 10 | >> Compensation Duration | ELEMENT | Indication for the duration of entering the ES compensation mode. |
| | | | Optional |
| 11 | >> Transmit Power | ELEMENT | As a compensation cell, the transmit power may be adjusted to increase the coverage. |
| | | | Unit: dBm |

The control style X and control action 1 are included in the RIC control header IE of the RIC control request message, while the specific RAN parameters of the control action shown in Table 3 are included in the RIC control message IE.

In case that the E2 node receives the control message including the control action, the E2 node transfers, based on the control command, the services of the cell that needs to enter the energy-saving mode to the energy-saving compensation cell, and hands over the UEs originally connected to the energy-saving cell to the compensation cell. In an embodiment, the Near-RT RIC may use the control style 3 (connection mode mobility control) to transfer the services of related UEs before indicating control action 1.

In order to ensure that the compensation cell may meet the previous coverage after the energy-saving cell is shut down, the transmit power may be configured to increase the coverage range of the compensation cell.

### (2) Enhanced design for the RIC control acknowledgment message

In order to support that the E2 node feeds back the execution outcome of the energy-saving control action to the Near -RT RIC in Step 3 of FIG. 2 and Step 3 of FIG. 3, an RIC control outcome information element (IE) is carried in the RIC control acknowledgment message.

It is considered to add the following energy-saving feedback parameters to the RIC control outcome IE, and whether the energy-saving cell enters the energy-saving mode and whether the compensation cell enters the energy-saving compensation mode may be jointly fed back.

**Table 4 Parameter Definitions for Control Style X Supported in RIC Control Outcome IE**

| RAN Parameter ID | RAN Parameter Name | RAN Parameter Type | RAN Parameter Description |
|---|---|---|---|
| 1 | Received Timestamp | OCTET STRING | |
| 2 | Cells ES Mode Configure Outcome | | Outcome feedback on whether the ES mode is activated for the configured cell. |
| 3 | > Cells ES Mode Configure Outcome Item | | |
| 4 | >> Cell Global ID | | Cell identifier |
| *5* | >> ES Activation Status | ENUMERATED (activated, deactivated) | Indication for activating or deactivating the cell ES mode. "Activated" indicates that the cell ES mode is activated, and "deactivated" indicates that the cell ES mode is not activated. |
| 6 | Compensation Cells Configure Outcome | | Outcome feedback on whether the compensation cell configured for the ES cell is activated. |
| 7 | > Compensation Cells Configure Outcome Item | | |
| 8 | >> Cell Global ID | | Cell identifier |
| 9 | >> Compensation Activation Status | ENUMERATED (activated, deactivated) | Indication on whether the compensation cell configured for the ES cell is activated. "Activated" indicates that it is activated, and "deactivated" indicates that it is not activated. |

In case that the configuration of the energy-saving mode for a certain cell fails, the activation status of the energy-saving mode may be set to "deactivated" to indicate it.

### (3) Enhanced design for the reporting message

In order to support that the E2 node reports the cell activation status to the Near-RT RIC in Step 4 of FIG. 2 and Step 4 of FIG. 3, the traditional reporting service needs to be enhanced. In case of subscribing to a report, the corresponding report content and the event trigger definition for the report need to be set.

It is considered to add the cell activation status to the specific parameters supported by the E2 node reporting in report style 3 of the traditional reporting service in E2SM-RC.

**Table 5 Specific Parameters Supported by E2 Node Reporting**

| RAN Parameter ID | RAN Parameter Name | Semantics Description |
|---|---|---|
| 1 | Cell Context Information | Used to report Cell Context information. |
| 2 | Cell Deleted | Used to report deleted cells, the value shall be set to "True" for the deleted Cell ID. |
| 3 | Neighbour Relation Table | Used to report neighbour relation information of the serving cells. |
| 4 | Cell Activation Status | Used to report the cell activation status after the cell enters or exits the ES mode. |
| | | It is defined as enumerated (True, False), where True indicates that the cell is activated, and False indicates that the cell is not activated. |

The corresponding event trigger definition style 3 for the report style 3 is E2 node information change, and it considers to add a new event trigger for the change of energy-saving status of the cell.

**Table 6 Event Trigger Supported by Event Trigger Style 3**

| E2 Node Information Change ID | E2 Node Information Change Type | Description |
|---|---|---|
| 1 | Cell Configuration Change | Triggered when any serving cell's context information has changed. |
| 2 | Cell Neighbor Relation Change | Triggered when any serving cell's neighbor relation information has changed. |
| 3 | Slice Configuration Change | Triggered when slice configuration in any serving cell has changed. |
| 4 | Cell Energy Saving Status Change | Triggered when the energy-saving status of the cell changes, and used in two situations: the cell enters the energy-saving mode or the cell exits the energy-saving mode. |

After the E2 node configures the energy-saving cell and the duration of the energy-saving mode based on the specific parameters in the energy-saving control action, the corresponding cell exits the energy-saving status after the duration. The E2 node may decide whether the cell is reactivated based on the load condition. Since the cell exits the energy-saving status, which meets the event trigger of cell energy saving status change in event trigger style 3, the E2 node feeds back the information of the cell activation status to the Near-RT RIC through report style 3.

### Example 2: intelligent cell shutdown is achieved by executing cell-level control in E2 service model for cell configuration and control (E2SM-CCC)

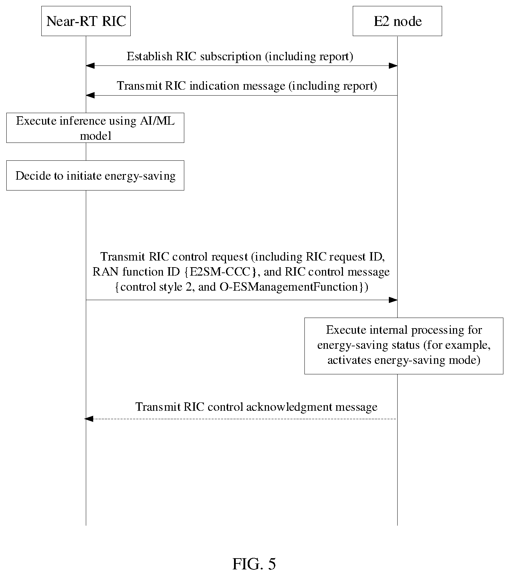

FIG. 5 is a schematic diagram of a control procedure based on E2SM-CCC according to an embodiment of the present application. Referring to FIG. 5, a method for energy-saving control provided by an embodiment of the present application includes the following steps.

Step 1: a reporting related to RIC subscription is established between the Near-RT RIC and the E2 node to collect information such as configurations, performance indicators, and measurement reports.

Step 2: the E2 node transmits an RIC indication message based on subscription requirements, where the RIC indication message includes energy-saving related reporting information, such as cell load related information, cell traffic information, cell energy efficiency, or cell power consumption related to measurement reports.

Step 3: the Near-RT RIC analyzes data based on the information reported by the E2 node, executes inference using the AI/ML model, and decides to initiate energy-saving control for the E2 node based on optimization objectives or policies.

Step 4: the Near-RT RIC transmits an RIC control request message, where the RAN function identifier (ID) is indicated as E2SM-CCC, which includes parameters defined in E2SM-CCC to control the E2 node.

Step 5: the E2 node executes the configuration for cell shutdown based on a control command designated by the Near-RT RIC. The E2 node may further feed back an RIC control acknowledgment message to the Near-RT RIC upon executing the action.

In the above steps, the enhanced design for some messages includes the following aspects.

### (1) Enhanced design for RIC control request message

Regarding the defined control style 2: the specific controllable parameters in cell configuration and control, it is considered to add open energy-saving mode management function (O-ESManagementFunction) in cell-level RAN configuration structures to support the new characteristic of energy-saving.

**Table 7 RAN Configuration Structure Supported by Control Style 2 in E2SM-CCC**

| RAN Configuration Structure Name | Semantics Description |
|---|---|
| Open New Radio Cell Centralized Unit (O-NRCellCU) | Represents the parameters of O-NRCellCU. |
| Open New Radio Cell Distributed Unit (O-NRCellDU) | Represents the parameters of O-NRCellDU. |
| Open Bandwidth Part (O-BWP) | Represents the parameters of O-BWP. |
| Open Radio Resource Management Policy Ratio | Represents the parameters of O-RRMPolicyRatio. |
| (O-RRMPolicyRatio) | |
| Open Energy-Saving Management Function | Represents the parameters of O-ESManagementFunction. |
| (O-ESManagementFunction) | |

The specific parameters of the open energy-saving management function are referenced in Table 8.

**Table 8 Parameter Definitions of the Open Energy-Saving Management Function**

| IE/Group Name | Presence | IE type and reference | Semantics description |
|---|---|---|---|
| esSwitch | M | ENUMRATED (TRUE, FALSE) | The parameter determines whether the ES function is enabled or disabled |
| energySavingControl | M | ENUMRATED (toBeEnergySaving, toBeNotEnergySavi ng) | Initializes the activation or deactivation of the energy-saving mode. |
| energySavingStatus | M | ENUMRATED (isNotEnergySaving , isEnergySaving) | The parameter indicates the energy-saving status within the cell. |
| | | | If specified as energy-saving, the status should be isEnergySaving. |
| intraRatEsActivationOriginalCellL oadParameters | C (Present in case that the cell is an original cell) | | If the cell is an original cell, the parameter indicates the load threshold and duration, used to indicate that the cell enters the energy-saving status in case that the cell load threshold is below the threshold (Threshold) for the duration (TimeDuration). |
| > Threshold | | INTEGER(0..100) | Utilization percentage of PRB |
| > TimeDuration | | INTEGER | Unit: second |
| ESDurationforOriginalCell | O | | If the cell is an original cell, the parameter indicates the duration for which the cell remains in the energy-saving status. Optional |
| intraRatEsActivationCandidateCell sLoadParameters | C (Present in case that the cell is a candidate cell) | | If the cell is a candidate cell, it is supported to provide the coverage of the original cell after the original cell enters the energy-saving status. The parameter indicates the load threshold and duration, used to indicate that the cell enters the energy-saving status in case that the cell load threshold is below the threshold (Threshold) for the duration (TimeDuration). |
| > Threshold | | INTEGER(0..100) | Utilization percentage of PRB |
| > TimeDuration | | INTEGER | Unit: second |
| intraRatEsDeactivationCandidateC ellsLoadParameters | C (Present in case that the cell is a candidate cell) | | The parameter is used for the cell as a candidate cell. The parameter indicates the load threshold and duration, which indicates that the original cell for which the candidate cell provides backup coverage needs to be waken up in case that the candidate cell load threshold is above Threshold for TimeDuration. |
| > Threshold | M | INTEGER(0..100) | Utilization percentage of PRB |
| > TimeDuration | M | INTEGER | Unit: second |
| CompensationDurationforCandidat eCell | O | | The parameter is used for the cell as a candidate cell. The duration for which the candidate cell supports the energy-saving status. |
| | | | Optional |
| TransimitPower | O | INTEGER | The parameter is used for the cell as a candidate cell. |
| | | | The candidate cell optionally adjusts the transmit power to increase coverage. Optional |
| | | | Unit: dBm |
| esNotAllowedTimePeriodList | O | List | The parameter is used to prevent a cell from entering the energy-saving status. |
| > timePeriodItem | | | |
| >> daysOfWeekList | | | Indicates a specific day of the week. |
| >>> daysOfWeekItem | | | |
| >>>> weekDay | M | ENUMRATED (Monday, Tuesday, ... Sunday) | |
| >> dailyPeriod | M | | Indicates a specific time of the day using UTC time, where endTime should be later than startTime. |
| >>> startTime | M | OCTET STRING (SIZE(8)) | |
| >>> endTime | M | OCTET STRING (SIZE(8)) | |

In case of using the open energy-saving management function configuration, if the method in FIG. 2 is adopted, the parameters for the energy-saving mode duration of the original cell (ESDurationforOriginalCell) and the energy-saving compensation mode duration for the candidate cell (CompensationDurationforCandidateCell) may be added as indications of the energy-saving mode duration. If the method in FIG. 3 is adopted, the above two parameters are not required for configuration.

### (2) RIC control acknowledgment message

Regarding to the Step 3 in FIG. 2 and the Step 3 in FIG. 3, the E2 node feeds back the execution outcome of the energy-saving control to the Near-RT RIC, and carries the RIC control outcome IE in the RIC control acknowledgment message. Currently, the cell-level control outcome defined in E2SM-CCC supports the outcome feedback for the configuration of the parameters in Table 8, that is, the configuration status of the energy-saving status may be fed back. Regarding whether the parameters in the energy-saving mode feedback are successfully configured, the successfully configured parameters are placed in the RAN configuration structures accepted list, and the failed ones are placed in the RAN configuration structures failed list.

### (3) RIC indication reporting message

E2SM-CCC currently defines the reporting of cell-level configurations. In case that the above parameters changes, the E2 node may directly trigger and report, for example, reporting the change of the energy-saving status.

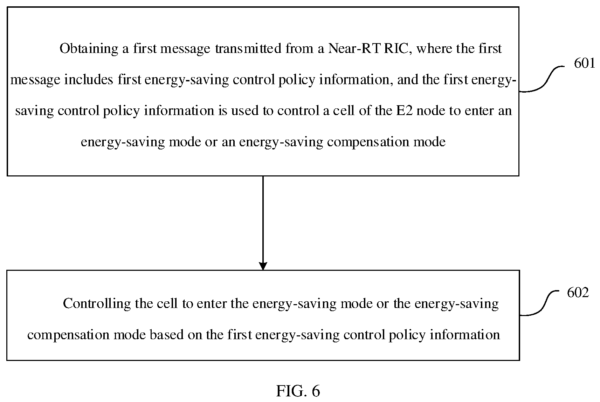

FIG. 6 is a second schematic flowchart of a method for energy-saving control according to an embodiment of the present application. Referring to FIG. 6, an embodiment of the present application provides a method for energy-saving control, and an execution subject of the method is an E2 node. The method includes:
step 601: obtaining a first message transmitted from a near-real-time radio access network (RAN) intelligent controller (Near-RT RIC), where the first message includes first energy-saving control policy information, and the first energy-saving control policy information is used to control a cell of the E2 node to enter an energy-saving mode or an energy-saving compensation mode; and
step 602: controlling the cell to enter the energy-saving mode or the energy-saving compensation mode based on the first energy-saving control policy information.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the method further includes:
transmitting cell energy-saving control execution outcome information to the Near-RT RIC.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the method further includes:
transmitting feedback information of a cell activation status to the Near-RT RIC.

In some embodiments, the method further includes:
determining that a duration of the energy-saving mode is reached and a cell energy-saving mode changes.

In some embodiments, the method further includes:
obtaining a second message transmitted from the Near-RT RIC, where the second message is used to subscribe to the feedback information, reported from the E2 node, of the cell activation status in case that a cell energy-saving mode changes; and
receiving a request to subscribe to the feedback information of the cell activation status.

In some embodiments, the method further includes:
obtaining a third message transmitted from the Near-RT RIC, where the third message includes second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

In some embodiments, the second energy-saving control policy information includes one or more of the following types of information:
a cell identifier;
a cell group identifier;
an indication for exiting the energy-saving mode; or
an indication for exiting the energy-saving compensation mode.

In an embodiment, the method for energy-saving control provided by the embodiments of the present application may refer to the above-mentioned behavioral method embodiment with the Near-RT RIC as the execution subject, and may achieve the same effects. The same parts and beneficial effects in the embodiments as those in the above corresponding method embodiments are not described in detail.

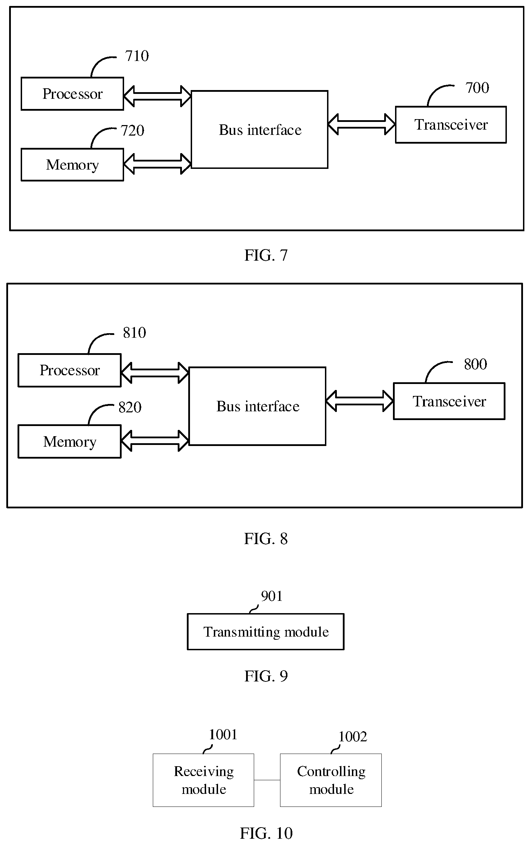

FIG. 7 is a schematic structural diagram of a near-real-time radio access network (RAN) intelligent controller (Near-RT RIC) according to an embodiment of the present application. As shown in FIG. 7, the Near-RT RIC includes a memory 720, a transceiver 700, and a processor 710;
where the memory 720 is used for storing a computer program; the transceiver 700 is used for receiving and transmitting data under control of the processor 710; and the processor 710 is used for reading the computer program in the memory 720 and performing the following operations:
transmitting a first message to an E2 node, where the first message includes first energy-saving control policy information, and the first energy-saving control policy information is used to control a cell of the E2 node to enter an energy-saving mode or an energy-saving compensation mode.

In an embodiment, the transceiver 700 is used for receiving and transmitting data under the control of the processor 710.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits, etc., which are well known in the art, and therefore are not further described in the present application. The bus interface provides an interface. The transceiver 700 may include multiple elements, i.e., including a transmitter and a receiver, for providing units for communicating with various other devices over transmission media including wireless channels, wired channels, fiber optic cables, and the like. For different user equipments, a user interface 730 may be an interface with a capability of connecting external and internal devices, including but are not limited to keypads, displays, speakers, microphones, joysticks, etc.

The processor 710 is responsible for managing the bus architecture and general processing, and the memory 720 may store data used by the processor 710 when performing operations.

In some embodiments, the processor 710 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods performed by the Near-RT RIC provided by the embodiments of the present application according to the obtained executable instructions. The processor and the memory may also be arranged to be physically separated.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the processor is further used for:
obtaining cell energy-saving control execution outcome information transmitted from the E2 node.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the processor is further used for:
obtaining feedback information, transmitted from the E2 node, of a cell activation status.

In some embodiments, the processor is further used for:
transmitting a second message to the E2 node, where the second message is used to subscribe to the feedback information, reported from the E2 node, of the cell activation status in case that a cell energy-saving mode changes.

In some embodiments, after transmitting the first message to the E2 node, the processor is further used for:
obtaining cell energy-saving related information transmitted from the E2 node;
obtaining second energy-saving control policy information based on the cell energy-saving related information; and
transmitting a third message to the E2 node, where the third message includes the second energy-saving control policy information, and the second energy-saving control policy information is used to control the cell of the E2 node to exit the energy-saving mode or the energy-saving compensation mode.

In some embodiments, the second energy-saving control policy information includes one or more of the following types of information:
a cell identifier;
a cell group identifier;
an indication for exiting the energy-saving mode; or
an indication for exiting the energy-saving compensation mode.

It should be noted here that the above-mentioned Near-RT RIC provided by the embodiments of the present application may implement all the method steps implemented by the above-mentioned method embodiment with the Near-RT RIC as the execution subject, and may achieve the same effects. The same parts and beneficial effects in the embodiments as those in the method embodiments are not described in detail.

FIG. 8 is a schematic structural diagram of an E2 node according to an embodiment of the present application. As shown in FIG. 8, the E2 node includes a memory 820, a transceiver 800, and a processor 810;
where the memory 820 is used for storing a computer program; the transceiver 800 is used for receiving and transmitting data under control of the processor 810; and the processor 810 is used for reading the computer program in the memory 820 and performing the following operations:
obtaining a first message transmitted from a near-real-time radio access network (RAN) intelligent controller (Near-RT RIC), where the first message includes first energy-saving control policy information, and the first energy-saving control policy information is used to control a cell of the E2 node to enter an energy-saving mode or an energy-saving compensation mode; and
controlling the cell to enter the energy-saving mode or the energy-saving compensation mode based on the first energy-saving control policy information.

In an embodiment, the transceiver 800 is used for receiving and transmitting data under the control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, etc., which are well known in the art, and therefore are not further described in the present application. The bus interface provides an interface. The transceiver 800 may include multiple elements, i.e., including a transmitter and a receiver, for providing units for communicating with various other devices over transmission media including wireless channels, wired channels, fiber optic cables, and the like. The processor 810 is responsible for managing the bus architecture and general processing, and the memory 820 may store data used by the processor 810 when performing operations.

The processor 810 may be a central processing unit (CPU), an application specific integrated circuit (ASIC), a field-programmable gate array (FPGA), or a complex programmable logic device (CPLD), the processor may also use a multi-core architecture.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the processor is further used for:
transmitting cell energy-saving control execution outcome information to the Near-RT RIC.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the processor is further used for:
transmitting feedback information of a cell activation status to the Near-RT RIC.

In some embodiments, the processor is further used for:
determining that a duration of the energy-saving mode is reached and a cell energy-saving mode changes.

In some embodiments, the processor is further used for:
obtaining a second message transmitted from the Near-RT RIC, where the second message is used to subscribe to the feedback information, reported from the E2 node, of the cell activation status in case that a cell energy-saving mode changes; and
receiving a request to subscribe to the feedback information of the cell activation status.

In some embodiments, the processor is further used for:
obtaining a third message transmitted from the Near-RT RIC, where the third message includes second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

In some embodiments, the second energy-saving control policy information includes one or more of the following types of information:
a cell identifier;
a cell group identifier;
an indication for exiting the energy-saving mode; or
an indication for exiting the energy-saving compensation mode.

In an embodiment, the E2 node provided by the embodiments of the present application may implement all the method steps implemented by the above-mentioned method embodiment with the E2 node as the execution subject, and may achieve the same effects. The same parts and beneficial effects in the embodiments as those in the method embodiments are not described in detail.

FIG. 9 is a first schematic structural diagram of an apparatus for energy-saving control according to an embodiment of the present application. Referring to FIG. 9, the apparatus for energy-saving control provided by an embodiment of the present application includes a transmitting module 901,
where the transmitting module 901 used for transmitting a first message to an E2 node, where the first message includes first energy-saving control policy information, and the first energy-saving control policy information is used to control a cell of the E2 node to enter an energy-saving mode or an energy-saving compensation mode.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the transmitting module is further used for:
obtaining cell energy-saving control execution outcome information transmitted from the E2 node.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the apparatus is further used for:
obtaining feedback information, transmitted from the E2 node, of a cell activation status.

In some embodiments, the apparatus is further used for:
transmitting a second message to the E2 node, where the second message is used to subscribe to the feedback information, reported from the E2 node, of the cell activation status in case that a cell energy-saving mode changes.

In some embodiments, after transmitting the first message to the E2 node, further including:
obtaining cell energy-saving related information transmitted from the E2 node;
obtaining second energy-saving control policy information based on the cell energy-saving related information; and
transmitting a third message to the E2 node, where the third message includes the second energy-saving control policy information, and the second energy-saving control policy information is used to control the cell of the E2 node to exit the energy-saving mode or the energy-saving compensation mode.

In some embodiments, the second energy-saving control policy information includes one or more of the following types of information:
a cell identifier;
a cell group identifier;
an indication for exiting the energy-saving mode; or
an indication for exiting the energy-saving compensation mode.

In an embodiment, the above-mentioned apparatus for energy-saving control provided by the embodiments of the present application may implement all the steps of methods implemented by the above-mentioned method embodiment with the Near-RT RIC as the execution subject, and may achieve the same effects. The same parts and beneficial effects in the embodiments as those in the method embodiments are not described in detail.

FIG. 10 is a second schematic structural diagram of an apparatus for energy-saving control according to an embodiment of the present application. Referring to FIG. 10, the apparatus for energy-saving control provided by an embodiment of the present application includes a receiving module 1001 and a controlling module 1002,
where the receiving module 1001, used for obtaining a first message transmitted from a near-real-time radio access network (RAN) intelligent controller (Near-RT RIC), where the first message includes first energy-saving control policy information, and the first energy-saving control policy information is used to control a cell of an E2 node to enter an energy-saving mode or an energy-saving compensation mode; and
the controlling module 1002, used for controlling the cell to enter the energy-saving mode or the energy-saving compensation mode based on the first energy-saving control policy information.

In some embodiments, the first energy-saving control policy information includes one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

In some embodiments, the apparatus is further used for:
transmitting cell energy-saving control execution outcome information to the Near-RT RIC.

In some embodiments, the cell energy-saving control execution outcome information includes one or more of the following types of information:
a cell identifier;
a cell group identifier;
an outcome feedback on whether a cell energy-saving mode is activated; or
an outcome feedback on whether a cell energy-saving compensation mode is activated.

In some embodiments, the apparatus is further used for:
transmitting feedback information of a cell activation status to the Near-RT RIC.

In some embodiments, the apparatus is further used for:
determining that a duration of the energy-saving mode is reached and a cell energy-saving mode changes.

In some embodiments, the apparatus is further used for:
obtaining a second message transmitted from the Near-RT RIC, where the second message is used to subscribe to the feedback information, reported from the E2 node, of the cell activation status in case that a cell energy-saving mode changes; and
receiving a request to subscribe to the feedback information of the cell activation status.

In some embodiments, the apparatus is further used for:
obtaining a third message transmitted from the Near-RT RIC, where the third message includes second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

In some embodiments, the second energy-saving control policy information includes one or more of the following types of information:
a cell identifier;
a cell group identifier;
an indication for exiting the energy-saving mode; or
an indication for exiting the energy-saving compensation mode.

In an embodiment, the above-mentioned apparatus for energy-saving control provided by the embodiments of the present application may implement all the steps of methods implemented by the above-mentioned method embodiment with the E2 node as the execution subject, and may achieve the same effects. The same parts and beneficial effects in the embodiments as those in the method embodiments are not described in detail.

It should be noted that, the division of units/ module in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

An embodiment of the present application provides a computer-readable storage medium, which stores a computer program, and the computer program is used for causing a computer to perform any of the methods for energy-saving control provided by the above embodiments.

In an embodiment, the above-mentioned computer-readable storage medium provided by the embodiments of the present application may implement all the steps of methods implemented by the above-mentioned method, and may achieve the same effects. The same parts and beneficial effects in the embodiments as those in the method embodiments are not described in detail.

It should be noted that, the computer-readable storage medium may be any available medium or data storage device that may be accessed by a processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

It should be further noted that: in the embodiments of the present application, the terms "first", "second", etc. are used to distinguish similar objects, rather than to describe a specific order or sequence. It should be understood that the terms used in this way may be interchanged under appropriate circumstances, and the embodiments of the present application may be implemented in an order other than those illustrated or described herein. The objects distinguished by "first" and "second" are usually of the same category, and do not limit the number of objects. For example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

"Determining B based on A" in the present application means that the factor A should be considered when determining B. It is not limited to "determining B only based on A", but also includes "determining B based on A and C", "determining B based on A, C and E", "determining C based on A, and further determining B based on C", etc. In addition, it may also include taking A as a condition for determining B, for example, "in case that A meets a first condition, determining B by using a first method". For another example, "in case that A meets a second condition, determining B", etc. For another example, "in case that A meets a third condition, determining B based on a first parameter", etc. In an embodiment, it may be that A is taken as a condition for determining a factor of B, for example, "in case that A meets the first condition, determining C by using the first method, and further determining B based on C", etc.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), or a computer with a mobile terminal device, e.g., a portable mobile device, a pocket-sized mobile device, a handheld mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with the wireless terminal device through one or more sectors on the air interface in the access network, or other names. The network device may be used for exchanging the received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be arranged to be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, pre-coding transmission, beamforming transmission, etc.

As will be appreciated by those skilled in the art, embodiments of the present application may be provided as methods, systems, or computer program products. The present application may take the form of an entirely hardware embodiment, an entirely software embodiment, or an embodiment combining software and hardware. Moreover, the present application may take the form of a computer program product implemented on one or more computer-usable storage media (including but not limited to disk storage and optical storage, etc.) having computer-usable program code.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for energy-saving control, performed by a near-real-time radio access network, RAN, intelligent controller, Near-RT RIC, comprising:
transmitting a first message to an E2 node, wherein the first message comprises first energy-saving control policy information, and the first energy-saving control policy information is used to control a cell of the E2 node to enter an energy-saving mode or an energy-saving compensation mode.

2. The method of claim 1, wherein the first energy-saving control policy information comprises one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

3. The method of claim 1, further comprising:
obtaining cell energy-saving control execution outcome information transmitted from the E2 node.

4. The method of claim 3, wherein the cell energy-saving control execution outcome information comprises one or more of the following types of information:
a cell identifier;
a cell group identifier;
an outcome feedback on whether a cell energy-saving mode is activated; or
an outcome feedback on whether a cell energy-saving compensation mode is activated.

5. The method of claim 1, further comprising:
obtaining feedback information, transmitted from the E2 node, of a cell activation status.

6. The method of claim 5, further comprising:
transmitting a second message to the E2 node, wherein the second message is used to subscribe to the feedback information, reported from the E2 node, of the cell activation status in case that a cell energy-saving mode changes.

7. The method of claim 1, wherein after transmitting the first message to the E2 node, the method further comprising:
obtaining cell energy-saving related information transmitted from the E2 node;
obtaining second energy-saving control policy information based on the cell energy-saving related information; and
transmitting a third message to the E2 node, wherein the third message comprises the second energy-saving control policy information, and the second energy-saving control policy information is used to control the cell of the E2 node to exit the energy-saving mode or the energy-saving compensation mode.

8. The method of claim 7, wherein the second energy-saving control policy information comprises one or more of the following types of information:
a cell identifier;
a cell group identifier;
an indication for exiting the energy-saving mode; or
an indication for exiting the energy-saving compensation mode.

9. A method for energy-saving control, performed by an E2 node, comprising:
obtaining a first message transmitted from a near-real-time radio access network, RAN, intelligent controller, Near-RT RIC, wherein the first message comprises first energy-saving control policy information, and the first energy-saving control policy information is used to control a cell of the E2 node to enter an energy-saving mode or an energy-saving compensation mode; and
controlling the cell to enter the energy-saving mode or the energy-saving compensation mode based on the first energy-saving control policy information.

10. The method of claim 9, wherein the first energy-saving control policy information comprises one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

11. The method of claim 9, further comprising:
transmitting cell energy-saving control execution outcome information to the Near-RT RIC.

12. The method of claim 11, wherein the cell energy-saving control execution outcome information comprises one or more of the following types of information:
a cell identifier;
a cell group identifier;
an outcome feedback on whether a cell energy-saving mode is activated; or
an outcome feedback on whether a cell energy-saving compensation mode is activated.

13. The method of claim 9, further comprising:
transmitting feedback information of a cell activation status to the Near-RT RIC.

14. The method of claim 13, further comprising:
determining that a duration of the energy-saving mode is reached and a cell energy-saving mode changes.

15. The method of claim 13, further comprising:
obtaining a second message transmitted from the Near-RT RIC, wherein the second message is used to subscribe to the feedback information, reported from the E2 node, of the cell activation status in case that a cell energy-saving mode changes; and
receiving a request to subscribe to the feedback information of the cell activation status.

16. The method of claim 9, further comprising:
obtaining a third message transmitted from the Near-RT RIC, wherein the third message comprises second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

17. The method of claim 16, wherein the second energy-saving control policy information comprises one or more of the following types of information:
a cell identifier;
a cell group identifier;
an indication for exiting the energy-saving mode; or
an indication for exiting the energy-saving compensation mode.

18. A network device, used in a near-real-time radio access network, RAN, intelligent controller, Near-RT RIC, comprising: a memory, a transceiver, and a processor;
wherein the memory is used for storing a computer program; the transceiver is used for receiving and transmitting data under control of the processor; and the processor is used for reading the computer program in the memory and performing the following operations:
transmitting a first message to an E2 node, wherein the first message comprises first energy-saving control policy information, and the first energy-saving control policy information is used to control a cell of the E2 node to enter an energy-saving mode or an energy-saving compensation mode.

19. The network device of claim 18, wherein the first energy-saving control policy information comprises one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

20. The network device of claim 18, wherein the processor is further used for:
obtaining cell energy-saving control execution outcome information transmitted from the E2 node.

21. The network device of claim 20, wherein the cell energy-saving control execution outcome information comprises one or more of the following types of information:
a cell identifier;
a cell group identifier;
an outcome feedback on whether a cell energy-saving mode is activated; or
an outcome feedback on whether a cell energy-saving compensation mode is activated.

22. The network device of claim 18, wherein the processor is further used for:
obtaining feedback information, transmitted from the E2 node, of a cell activation status.

23. The network device of claim 22, wherein the processor is further used for:
transmitting a second message to the E2 node, wherein the second message is used to subscribe to the feedback information, reported from the E2 node, of the cell activation status in case that a cell energy-saving mode changes.

24. The network device of claim 18, wherein after transmitting the first message to the E2 node, the processor is further used for:
obtaining cell energy-saving related information transmitted from the E2 node;
obtaining second energy-saving control policy information based on the cell energy-saving related information; and
transmitting a third message to the E2 node, wherein the third message comprises the second energy-saving control policy information, and the second energy-saving control policy information is used to control the cell of the E2 node to exit the energy-saving mode or the energy-saving compensation mode.

25. The network device of claim 24, wherein the second energy-saving control policy information comprises one or more of the following types of information:
a cell identifier;
a cell group identifier;
an indication for exiting the energy-saving mode; or
an indication for exiting the energy-saving compensation mode.

26. A network device, used in an E2 node, comprising: a memory, a transceiver, and a processor;
wherein the memory is used for storing a computer program; the transceiver is used for receiving and transmitting data under control of the processor; and the processor is used for reading the computer program in the memory and performing the following operations:
obtaining a first message transmitted from a near-real-time radio access network, RAN, intelligent controller, Near-RT RIC, wherein the first message comprises first energy-saving control policy information, the first energy-saving control policy information is used to control a cell of the E2 node to enter an energy-saving mode or an energy-saving compensation mode; and
controlling the cell to enter the energy-saving mode or the energy-saving compensation mode based on the first energy-saving control policy information.

27. The network device of claim 26, wherein the first energy-saving control policy information comprises one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

28. The network device of claim 26, wherein the processor is further used for:
transmitting cell energy-saving control execution outcome information to the Near-RT RIC.

29. The network device of claim 28, wherein the cell energy-saving control execution outcome information comprises one or more of the following types of information:
a cell identifier;
a cell group identifier;
an outcome feedback on whether a cell energy-saving mode is activated; or
an outcome feedback on whether a cell energy-saving compensation mode is activated.

30. The network device of claim 26, wherein the processor is further used for:
transmitting feedback information of a cell activation status to the Near-RT RIC.

31. The network device of claim 30, wherein the processor is further used for:
determining that a duration of the energy-saving mode is reached and a cell energy-saving mode changes.

32. The network device of claim 30, wherein the processor is further used for:
obtaining a second message transmitted from the Near-RT RIC, wherein the second message is used to subscribe to the feedback information, reported from the E2 node, of the cell activation status in case that a cell energy-saving mode changes; and
receiving a request to subscribe to the feedback information of the cell activation status.

33. The network device of claim 26, wherein the processor is further used for:
obtaining a third message transmitted from the Near-RT RIC, wherein the third message comprises second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

34. The network device of claim 33, wherein the second energy-saving control policy information comprises one or more of the following types of information:
a cell identifier;
a cell group identifier;
an indication for exiting the energy-saving mode; or
an indication for exiting the energy-saving compensation mode.

35. An apparatus for energy-saving control, comprising:
a transmitting module, used for transmitting a first message to an E2 node, wherein the first message comprises first energy-saving control policy information, and the first energy-saving control policy information is used to control a cell of the E2 node to enter an energy-saving mode or an energy-saving compensation mode.

36. The apparatus of claim 35, wherein the first energy-saving control policy information comprises one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

37. The apparatus of claim 35, wherein the transmitting module is further used for:
obtaining cell energy-saving control execution outcome information transmitted from the E2 node.

38. The apparatus of claim 37, wherein the cell energy-saving control execution outcome information comprises one or more of the following types of information:
a cell identifier;
a cell group identifier;
an outcome feedback on whether a cell energy-saving mode is activated; or
an outcome feedback on whether a cell energy-saving compensation mode is activated.

39. The apparatus of claim 35, wherein the apparatus is further used for:
obtaining feedback information, transmitted from the E2 node, of a cell activation status.

40. The apparatus of claim 39, wherein the apparatus is further used for:
transmitting a second message to the E2 node, wherein the second message is used to subscribe to the feedback information, reported from the E2 node, of the cell activation status in case that a cell energy-saving mode changes.

41. The apparatus of claim 35, wherein after transmitting the first message to the E2 node, further comprising:
obtaining cell energy-saving related information transmitted from the E2 node;
obtaining second energy-saving control policy information based on the cell energy-saving related information; and
transmitting a third message to the E2 node, wherein the third message comprises the second energy-saving control policy information, and the second energy-saving control policy information is used to control the cell of the E2 node to exit the energy-saving mode or the energy-saving compensation mode.

42. The apparatus of claim 41, wherein the second energy-saving control policy information comprises one or more of the following types of information:
a cell identifier;
a cell group identifier;
an indication for exiting the energy-saving mode; or
an indication for exiting the energy-saving compensation mode.

43. An apparatus for energy-saving control, comprising:
a receiving module, used for obtaining a first message transmitted from a near-real-time radio access network, RAN, intelligent controller, Near-RT RIC, wherein the first message comprises first energy-saving control policy information, and the first energy-saving control policy information is used to control a cell of an E2 node to enter an energy-saving mode or an energy-saving compensation mode; and
a controlling module, used for controlling the cell to enter the energy-saving mode or the energy-saving compensation mode based on the first energy-saving control policy information.

44. The apparatus of claim 43, wherein the first energy-saving control policy information comprises one or more of the following types of information:
a cell identifier;
a cell group identifier;
an indication for entering the energy-saving mode;
an indication for entering the energy-saving compensation mode;
a duration of the energy-saving mode;
a duration of the energy-saving compensation mode;
an absolute value of transmit power in a compensation mode; or
a relative value of transmit power in a compensation mode.

45. The apparatus of claim 43, wherein the apparatus is further used for:
transmitting cell energy-saving control execution outcome information to the Near-RT RIC.

46. The apparatus of claim 45, wherein the cell energy-saving control execution outcome information comprises one or more of the following types of information:
a cell identifier;
a cell group identifier;
an outcome feedback on whether a cell energy-saving mode is activated; or
an outcome feedback on whether a cell energy-saving compensation mode is activated.

47. The apparatus of claim 43, wherein the apparatus is further used for:
transmitting feedback information of a cell activation status to the Near-RT RIC.

48. The apparatus of claim 47, wherein the apparatus is further used for:
determining that a duration of the energy-saving mode is reached and a cell energy-saving mode changes.

49. The apparatus of claim 47, wherein the apparatus is further used for:
obtaining a second message transmitted from the Near-RT RIC, wherein the second message is used to subscribe to the feedback information, reported from the E2 node, of the cell activation status in case that a cell energy-saving mode changes; and
receiving a request to subscribe to the feedback information of the cell activation status.

50. The apparatus of claim 43, wherein the apparatus is further used for:
obtaining a third message transmitted from the Near-RT RIC, wherein the third message comprises second energy-saving control policy information, and the second energy-saving control policy information is used to control the cell of the E2 node to exit the energy-saving mode or the energy-saving compensation mode; and
controlling the cell to exit the energy-saving mode or the energy-saving compensation mode based on the second energy-saving control policy information.

51. The apparatus of claim 50, wherein the second energy-saving control policy information comprises one or more of the following types of information:
a cell identifier;
a cell group identifier;
an indication for exiting the energy-saving mode; or
an indication for exiting the energy-saving compensation mode.

52. A computer-readable storage medium, storing a computer program, wherein the computer program is used for causing a computer to perform the method of any of claims 1 to 17.
